# DEMANDE DE BREVET EUROPEEN

(11) **EP 0 697 273 A1**
(43) Date de publication de la demande: **21.02.1996**
(21) Numéro de dépôt: 95202137.6
(22) Date de dépôt: 04.08.1995
(51) Int. Cl.: B29C 47/02, B29C 47/20

(54) **Moyens et procédé d'application d'une couche de finition de matière plastique à la surface d'un article composite; article composite revêtu**

(30) Priorité: 16.08.1994 BE 9400741; 27.12.1994 BE 9401176
(71) Demandeur: SOLVAY & Cie (Société Anonyme), B-1050 Bruxelles (BE)
(72) Inventeur: Dehennau, Claude, B-1410 Waterloo (BE); Dupont, Serge, B-1800 Vilvoorde (BE)
(74) Mandataire: Dufrasne, Eugène

(57) **Abrégé**

Moyens pour l'application d'une couche de finition de matière plastique à la surface d'un article composite comprenant un corps plein extrudé à base de matière plastique, renforcé par un ou plusieurs faisceaux de fibres de renforcement apposés à sa surface, comprenant une bague (1) dont le diamètre d'entrée (2) est supérieur à son diamètre de sortie (3), la surface intérieure (4) de ladite bague assurant en outre une variation dégressive du diamètre intérieur entre son entrée et sa sortie; procédé d'application d'une couche de finition dans lequel ces moyens sont utilisés et article composite revêtu.

## Description

La présente invention concerne des moyens et un procédé pour l'application d'une couche de finition de matière plastique à la surface d'un article composite, ainsi qu'un article composite revêtu.

Dans de nombreux domaines industriels, il est fait usage d'articles composites constitués d'un corps plein à base de matière plastique renforcé au moyen de fibres de renforcement telles que des fibres de verre. Ces fibres de renforcement peuvent notamment être mises en oeuvre sous la forme de faisceaux de fibres continues imprégnés d'une matière thermoplastique. Il est ainsi possible de fabriquer, par exemple, des barres, tiges, longerons, profilés, etc. renforcés par des faisceaux de fibres continues appliqués ou enroulés à leur surface, ces articles présentant un faible poids et une résistance mécanique élevée. Ces articles composites présentent toutefois l'inconvénient d'une sensibilité élevée aux agressions mécaniques et chimiques extérieures, ainsi que celui d'une surface irrégulière.

Pour ces différentes raisons, les articles sont souvent revêtus extérieurement d'une couche de finition de matière thermoplastique.

Il importe que la couche de finition adhère correctement à l'article; dans le cas contraire, la moindre fissure y apparaissant accidentellement pourrait notamment permettre à des produits extérieurs d'entrer en contact avec l'article proprement dit sur une grande partie de l'interface article-couche de finition, ce qui pourrait affecter la résistance mécanique de l'article. En outre, une mauvaise adhérence de la couche de finition pourrait dégrader ou rendre inhomogènes les propriétés mécaniques de l'article revêtu.

On comprend dès lors qu'il importe, pour plusieurs raisons, que l'adhérence de la couche de finition à l'article proprement dit soit élevée.

Pour revêtir des articles composites constitués d'un corps plein à base de matière plastique renforcé par un ou plusieurs faisceaux de fibres de renforcement apposés à sa surface, on recourt généralement à la surextrusion (encore qualifiée d'extrusion-couchage), qui consiste à simplement déposer la couche de finition à la surface de l'article. Ceci se fait classiquement en utilisant une tête de surextrusion en équerre, dans laquelle on injecte latéralement la matière plastique constitutive de la couche de finition à l'état fondu, l'article y entrant d'un côté pour en ressortir de l'autre revêtu de sa couche de finition. Un important inconvénient de cette technique de surextrusion est que la matière plastique constitutive de la couche de finition ne peut pas être injectée sous pression dans le dispositif de surextrusion. En effet, si elle était injectée sous pression, cette matière plastique fondue ne manquerait pas de s'échapper de ce dispositif de surextrusion par le côté d'entrée de l'article composite, ce qui serait particulièrement gênant. En raison de ce simple "dépôt" sans surpression de la couche de finition à la surface de l'article, toutefois, son adhérence est généralement mauvaise, ce qui risque de conduire notamment aux inconvénients énumérés ci-dessus.

L'adhérence est d'autant plus mauvaise qu'on utilise dans des articles composites des matières plastiques non compatibles.

Un autre problème lié à la couche de finition est qu'il convient généralement de donner à la surface extérieure de l'article revêtu une grande précision dimensionnelle, afin notamment de permettre son insertion précise dans des orifices ou éléments de raccordement tels que manchons, etc. Les dispositifs de calibrage connus sont des dispositifs autonomes d'une grande complexité.

L'invention a dès lors pour objet une solution simple permettant d'appliquer à la surface d'un article composite une couche de finition d'une manière garantissant à la fois sa bonne adhérence et le calibrage de l'article revêtu ainsi obtenu.

A cette fin, la présente invention concerne une bague d'application d'une couche de finition de matière plastique C à la surface d'un article composite comprenant un corps plein extrudé à base de matière plastique, renforcé par un ou plusieurs faisceaux de fibres de renforcement apposés à sa surface, le diamètre d'entrée de ladite bague étant supérieur à son diamètre de sortie, la surface intérieure de ladite bague assurant en outre une variation dégressive du diamètre intérieur entre son entrée et sa sortie.

Le corps plein extrudé peut être de tout type. Il peut notamment s'agir d'une barre, cylindrique ou prismatique, ou encore d'un profilé. Ce profilé peut être de tout type connu. Par extension, on entend également désigner ici un profilé non cylindrique creux.

Le corps plein présente avantageusement une section convexe. Toutefois, l'invention concerne également des corps pleins de section non convexe, les fibres de rerforcement étant alors apposées à leur surface parallèlement à leur axe longitudinal.

La matière plastique C peut être essentiellement constituée d'un ou plusieurs polymères quelconques. Avantageusement, elle est thermoplastique, c'est-à-dire que le ou les polymères dont elle est essentiellement constituée sont des polymères thermoplastiques. Si plusieurs polymères différents sont utilisés en mélange, ils doivent être compatibles entre eux, de manière notamment à ce que la couche de finition présente des propriétés mécaniques satisfaisantes. A titre de polymères thermoplastiques, on peut notamment citer les polyoléfines, dont par exemple le polyéthylène (PE), les polymères du chlorure de vinyle, dont par exemple le poly(chlorure de vinyle) (PVC), ainsi que les polymères dérivés du fluorure de vinylidène, dont par exemple le poly(fluorure de vinylidène) (PVDF). De bons résultats ont été obtenus à partir de polyoléfines, en particulier à partir de PE. Comme PE, on préfère utiliser le polyéthylène de moyenne densité (MDPE) ou de haute densité (HDPE). On préfère tout particulièrement que la matière plastique C soit essentiellement constituée de polyéthylène de haute densité (HDPE).

L'épaisseur de la couche de finition est déterminée classiquement en fonction du type d'article revêtu et des applications auxquelles il est destiné. Souvent, l'épaisseur de la couche de finition est faible, de préférence d'un ordre de grandeur sensiblement inférieur aux dimensions transversales moyennes de l'article. En particulier, l'épaisseur de la couche de finition est souvent de l'ordre de 1 à 2 mm. La couche de finition a plusieurs fonctions : tout d'abord, elle protège physiquement l'article et ses matériaux de renforcement de toute dégradation mécanique, notamment au cours de la manutention, du transport et de l'installation. Ceci est particulièrement important dans le cas d'articles renforcés par un ou plusieurs faisceaux de fibres de renforcement continues enroulés hélicoïdalement à leur surface. Ensuite, la couche de finition peut comporter des pigments facilitant l'identification de l'article, et/ou d'autres additifs tels que des stabilisants anti-UV. La couche de finition peut également assurer la protection chimique de l'article et de ses éventuels matériaux de renforcement, notamment vis-à-vis de produits corrosifs et de produits susceptibles de détériorer l'adhérence des matériaux de renforcement au corps de l'article. Elle peut encore, si son adhérence à l'article proprement dit est bonne, participer à la reprise des efforts et améliorer ainsi sa résistance.

L'article peut comprendre une ou plusieurs couches. En particulier, il peut s'agir d'un article multicouche dont au moins la couche extérieure est essentiellement constituée de matière plastique. On préfère utiliser des articles à base d'une matière plastique A répondant de manière analogue à la définition de la matière plastique C donnée ci-dessus.

On peut ajouter aux matières plastiques A et/ou C tout additif connu, par exemple un ou plusieurs pigments, adjuvants de mise en oeuvre, antioxydants, stabilisants, charges minérales, etc., pour autant que leur présence n'affecte pas sensiblement les propriétés mécaniques ni la compatibilité réciproque de ces matières plastiques.

Par bague, on entend désigner un solide comportant un orifice dont la section perpendiculaire à l'axe de l'article présente la forme de la section de l'article.

Par diamètre, on entend désigner le diamètre hydraulique de la section susmentionnée de l'orifice de la bague, soit quatre fois la surface de ladite section divisé par son périmètre. Dans le cas d'un orifice de section circulaire, ce diamètre hydraulique correspond au diamètre de l'orifice tandis que dans le cas particulier d'un orifice de section carrée, il correspond au côté de l'orifice.

En général, la dimension de l'orifice de sortie de la bague correspond approximativement à la dimension extérieure de l'article augmentée de deux fois l'épaisseur souhaitée de la couche de finition. Elle peut être très légèrement supérieure à la dimension finale de l'article revêtu de la couche de finition afin de prendre en compte le retrait de la matière plastique à intervenir lors de son refroidissement.

Le profil de la surface intérieure de la bague est de préférence tel que l'angle que forme sa tangente avec l'axe du tuyau soit relativement faible à sa sortie. De préférence, cet angle est inférieur à 5°. La surface intérieure de la bague ne présente de préférence aucune discontinuité dans la variation de son diamètre. Cette surface intérieure peut avantageusement comporter, du côté de la sortie de la bague, une zone de section constante, en particulier une zone cylindrique. De bons résultats ont été obtenus en donnant à la surface intérieure de la bague, ou du moins à sa partie de section non constante, un profil hyperbolique, parabolique ou rectiligne.

La bague peut être réalisée à partir de tout matériau adéquat ou de toute combinaison de matériaux adéquats ; elle peut notamment être à base d'un métal tel que l'acier ou le bronze.

La surface intérieure de la bague présente très avantageusement un faible coefficient de frottement par rapport à la matière plastique C. A cette fin, la surface intérieure peut comprendre un matériau anti-adhérent. Par matériau anti-adhérent on entend désigner un matériau anti-adhérent à la matière plastique qui traverse la bague. La surface intérieure est souvent constituée essentiellement d'un matériau anti-adhérent. On peut notamment réaliser toute la bague dans un tel matériau. On peut encore revêtir intérieurement une bague constituée d'un matériau adéquat d'une mince couche d'un matériau anti-adhérent, par exemple d'un polymère fluoré tel que le polytétrafluoréthylène (PTFE). Si nécessaire, un adhésif peut être utilisé pour fixer ce matériau à l'intérieur de la bague.

Cette bague s'utilise généralement conjointement à un dispositif de surextrusion tel que décrit ci-dessus, permettant de déposer une couche de finition de matière plastique à la surface d'un article. Un second objet de la présente invention concerne dès lors un dispositif d'application d'une couche de finition de matière plastique C à la surface d'un article composite comprenant un corps plein extrudé à base de matière plastique, renforcé par un ou plusieurs faisceaux de fibres de renforcement apposés à sa surface, comprenant un dispositif de surextrusion, qui se caractérise en ce qu'une bague telle que décrite ci-dessus est associée audit dispositif de surextrusion.

Le dispositif de surextrusion comprend un orifice d'entrée par lequel peut être introduit l'article, d'une dimension légèrement supérieure à celle de l'article, et un orifice de sortie situé dans l'axe de l'orifice d'entrée. Il comprend encore un orifice latéral par lequel la matière plastique constitutive de la couche de finition est injectée à l'état fondu. Le dispositif de surextrusion est en outre conçu de façon à ce que la matière plastique fondue se répartisse de manière homogène sur toute la périphérie de l'article. La matière plastique fondue peut entrer en contact avec l'article à l'intérieur du dispositif de surextrusion, celui-ci comportant un orifice unique de sortie par lequel sort l'article sur lequel est déposée la matière plastique C, ou à l'extérieur de ce dispositif, celui-ci comportant alors un orifice central par lequel sort l'article et un orifice périphérique concentrique par lequel sort la matière plastique C. A ce dispositif de surextrusion est associée une bague telle que décrite ci-dessus. Cette bague est généralement disposée dans l'axe de l'orifice de sortie du dispositif de surextrusion, à une faible distance de celui-ci. Elle peut très avantageusement lui être directement accolée. De cette façon, la matière plastique C constitutive de la couche de finition se trouve encore à une température élevée au moment où l'article sur lequel a été déposée la couche de finition traverse la bague, ce qui améliore l'efficacité de l'étape d'application, c'est-à-dire l'adhérence de la couche de finition à l'article. De préférence, la dimension de l'orifice d'entrée de la bague est légèrement supérieure ou égale à celle de l'orifice de sortie de la matière plastique C du dispositif de surextrusion.

Le dispositif utilisant une bague conforme à l'invention permet d'appliquer une couche de finition de matière plastique à la surface d'un article de manière ferme et durable, tout en conférant simultanément à l'article ainsi obtenu une dimension extérieure constante et précise.

En outre, un autre avantage du dispositif de l'invention est sa simplicité. Le dispositif de l'invention a comme avantage de ne comporter aucune pièce mobile, et d'exercer sur la couche de finition une pression répartie de manière parfaitement homogène.

Par ailleurs, ce dispositif d'application s'utilise avantageusement en combinaison avec le dispositif de fabrication de l'article. Dès lors, l'invention concerne également une installation pour la fabrication d'un article composite comprenant un corps plein extrudé à base de matière plastique, renforcé par un ou plusieurs faisceaux de fibres de renforcement apposés à sa surface et revêtu par une couche de finition de matière plastique C, comprenant un dispositif de fabrication de l'article ainsi qu'un dispositif d'application d'une couche de finition tel que défini ci-dessus. Dans le cas d'un article comprenant un corps plein multicouche à base de matière plastique, on utilise généralement un dispositif de coextrusion pour fabriquer le corps plein. Pour renforcer le corps plein par un ou plusieurs faisceaux de fibres de renforcement apposés à sa surface, le dispositif de fabrication de l'article comprend généralement un dispositif d'extrusion d'un corps plein à base de matière plastique A et un dispositif d'enroulement d'un ou plusieurs faisceaux de fibres de renforcement autour de ce corps plein. Selon une variante avantageuse, le corps plein est renforcé par un ou plusieurs faisceaux de fibres de renforcement enroulés hélicoïdalement à sa surface. De préférence, le ou les faisceaux de fibres de renforcement disposés hélicoïdalement autour du corps plein sont enroulés quasiment perpendiculairement à l'axe de celui-ci, par exemple à plus de 80°.

La matière plastique A répond de manière analogue à la définition de la matière plastique C donnée ci-dessus, et peut également contenir un ou plusieurs additifs tels que ceux cités ci-dessus. Si plusieurs polymères différents sont utilisés, en mélange ou en couches distinctes, pour le corps plein, ils doivent de préférence être compatibles entre eux, de manière à ce que le corps plein présente des propriétés mécaniques satisfaisantes.

Les fibres de renforcement utilisées dans le(s) faisceau(x) apposés à la surface du corps plein peuvent également être de tout type, par exemple des fibres de verre, de carbone ou d'aramide. On préfère utiliser des fibres de verre. Le diamètre des fibres est généralement de l'ordre de 7 à 100 µm. Ces fibres sont continues, ou du moins d'une très grande longueur, par exemple de l'ordre de plusieurs centaines de mètres.

De manière avantageuse, les fibres de renforcement sont préalablement imprégnées par une matière plastique B, et le faisceau de fibres de renforcement se présente ainsi sous la forme d'un COFIT (continuous fiber impregnated by a thermoplastic). Un tel faisceau peut en particulier être obtenu en imprégnant directement les fibres de renforcement par la matière plastique. Il peut également être obtenu en mettant en oeuvre un faisceau co-mêlé de fibres continues de renforcement et de fibres continues de matière plastique. Il peut encore être obtenu en mettant en oeuvre un faisceau de fibres de renforcement entre lesquelles a été dispersée la matière plastique en poudre. Dans ces deux derniers modes d'obtention, il est naturellement indispensable de chauffer le faisceau, avant son apposition sur le corps plein, de manière à ce que la matière plastique fonde et imprègne de manière homogène les fibres de renforcement.

La matière plastique B répond de manière analogue à la définition de la matière plastique C donnée ci-dessus, et peut également contenir un ou plusieurs additifs tels que ceux cités ci-dessus. Si la matière plastique B comprend plusieurs polymères différents utilisés en mélange, ils doivent être compatibles entre eux, de manière à ce que le COFIT présente des propriétés mécaniques satisfaisantes.

Afin d'assurer une bonne adhérence du COFIT au corps plein, et donc une bonne reprise des efforts par le COFIT, la matière plastique B est de préférence compatible avec la matière plastique A, ou d'une nature chimique semblable. A titre de paires de matières plastiques de nature chimique semblable, on peut par exemple utiliser conjointement soit deux polymères de type oléfinique (par exemple deux polymères de l'éthylène) soit deux polymères de type vinylique (par exemple deux polymères du chlorure de vinyle ou deux polymères du fluorure de vinylidène). Ces matières plastiques peuvent être rendues compatibles par l'utilisation d'un ou plusieurs agents compatibilisants adéquats.

L'apposition du faisceau de fibres de renforcement peut être réalisée de toute manière connue. En particulier, le faisceau peut être enroulé, plus particulièrement enroulé hélicoïdalement. Il peut être également apposé longitudinalement.

Pour améliorer l'adhérence entre le corps plein et le ou les COFIT, l'apposition de ces derniers se fait de préférence après avoir porté le corps plein et/ou le(s) COFIT à une température superficielle proche de la température de fusion ou de ramollissement de leur matière plastique constitutive A et/ou B. Avantageusement, l'apposition est assistée par l'application d'une pression.

Pour la même raison, il est souhaitable que la matière plastique C soit également compatible avec la matière plastique B, ou de nature chimique semblable, ce qui permet d'obtenir une bonne adhérence entre la couche de finition et la "couche" que constitue(nt) le(s) COFIT à la surface du corps plein. Cette bonne adhérence est fortement souhaitable, car elle évite tout risque de délamination de la couche de finition. Elle peut également être obtenue par l'utilisation d'un ou plusieurs agents compatibilisants adéquats.

Lorsque les fibres de renforcement sont imprégnées par une matière plastique B, on utilise généralement des quantités respectives de matière plastique B et de fibres de renforcement telles que le COFIT ainsi constitué contienne de l'ordre de plusieurs centaines, voire plusieurs milliers de fibres par mm² de section. On donne généralement à la couche de renforcement une épaisseur de l'ordre de 0,002 à 0,01 fois le diamètre du corps plein, en fonction des propriétés de la couche de finition et de la résistance mécanique souhaitée de l'article revêtu. Il est nécessaire que les fibres choisies soient chimiquement compatibles avec la matière plastique B ; pour accroître cette compatibilité, et donc leur adhérence à leur matrice, elles sont éventuellement revêtues d'un agent de couplage (ou d'ensimage) approprié. Dans le cas de fibres de verre, on peut par exemple utiliser à cette fin l'un des composés de la famille des silanes bien connus dans ce contexte.

Le dispositif d'application de la couche de finition est de préférence installé dans l'axe de la filière du dispositif d'extrusion et du dispositif de renforcement, tous trois étant disposés à faible distance l'un de l'autre, afin que le corps plein extrudé et renforcé se trouve encore à une température superficielle élevée lors de l'application de la couche de finition. Si ce n'est pas le cas, le corps plein extrudé et renforcé est avantageusement réchauffé superficiellement avant l'application de la couche de finition, en évitant évidemment de l'amener à une température qui pourrait entraîner sa déformation sensible.

Lorsqu'on utilise un dispositif d'enroulement pour apposer le(s) faisceau(x) de fibres de renforcement à la surface du corps plein, ce dispositif comprend généralement un ou plusieurs plateaux annulaires rotatifs, coaxiaux au corps plein extrudé et portant chacun un ou plusieurs dévidoirs de faisceaux de fibres de renforcement dont les axes sont sensiblement parallèles à celui du corps plein; il permet d'enrouler ce(s) faisceau(x) de manière approximativement hélicoïdale à la surface du mandrin. Lorsque les fibres de renforcement sont imprégnées de matière plastique B, on associe avantageusement à chaque dévidoir de faisceaux de fibres de renforcement un dispositif de chauffage permettant d'amener la matière plastique B imprégnant les fibres à une température proche de sa température de fusion ou de ramollissement, avant qu'ils n'entrent en contact avec le corps plein.

La présente invention concerne également un procédé permettant l'application d'une couche de finition de matière plastique à la surface d'un article composite comprenant un corps plein extrudé à base de matière plastique, renforcé par un ou plusieurs faisceaux de fibres de renforcement apposés à sa surface de telle manière que leur adhérence soit élevée et que l'article revêtu soit d'un diamètre extérieur relativement constant. Plus précisément, un autre objet de l'invention concerne un procédé d'application d'une couche de finition de matière plastique C sur un article composite comprenant un corps plein extrudé à base de matière plastique, renforcé par un ou plusieurs faisceaux de fibres de renforcement apposés à sa surface, dans lequel l'article traverse un dispositif d'application d'une couche de finition tel que décrit ci-dessus.

Afin d'éviter tout engorgement de la bague d'application de la couche de finition, ou en amont de celle-ci, par la matière plastique C, il est avantageux que le débit de ladite matière plastique entrant dans la bague corresponde au débit sortant de la bague pour constituer la couche de finition.

En particulier, le procédé conforme à l'invention est particulièrement intéressant lorsque l'article comprend un corps plein à base d'une matière plastique A renforcé par un ou plusieurs faisceaux de fibres de renforcement enroulés à sa surface. Comme exposé ci-dessus, le faisceau de fibres de renforcement est de préférence un COFIT.

Les matières plastiques A, B et C sont telles que définies ci-dessus. En particulier, les matières plastiques mises en oeuvre sont avantageusement thermoplastiques. De préférence, les matières plastiques mises en oeuvre sont compatibles. Dans un mode de réalisation particulièrement intéressant, les matières plastiques mises en oeuvre sont essentiellement constituées de polyéthylène de haute densité.

Ainsi qu'il a été déjà mentionné, l'invention permet d'obtenir des articles composites revêtus possédant des dimensions extérieures constantes et précises malgré l'interposition d'un ou plusieurs enroulements de faisceaux de fibres de renforcement entre le corps plein et la couche de finition.

L'invention concerne dès lors également un article composite comprenant un corps plein extrudé à base de matière plastique à la surface duquel sont apposés, et de préférence enroulés, un ou plusieurs COFIT et revêtu extérieurement par une couche de finition, qui se caractérise en ce que la variation moyenne de la rugosité de la surface extérieure mesurée le long d'une génératrice dudit article ne dépasse pas 0,4 mm. De préférence, cette variation ne dépasse pas 0,3 mm.

Par variation de la rugosité de la surface extérieure mesurée le long d'une génératrice de l'article, on entend ici désigner la différence de niveau entre les creux et les sommets de la surface extérieure de la couche de finition de l'article revêtu, mesurée le long d'une génératrice dudit article revêtu. A partir de la répétition de cette mesure le long de différentes génératrices, on peut calculer la variation moyenne caractéristique.

Cette variation moyenne exprime notamment la qualité du calibrage. Elle traduit aussi la mesure dans laquelle les irrégularités dues aux enroulements de faisceaux de fibres de renforcement ont pu être "compensées" par la couche de finition.

L'article revêtu peut encore comprendre éventuellement d'autres couches que le corps plein, les fibres de renforcement et la couche de finition. Par exemple une telle couche supplémentaire peut être une couche d'imperméabilisation pouvant être constituée d'une feuille métallique enroulée autour du corps plein et des fibres de renforcement, et sur laquelle est appliquée la couche de finition.

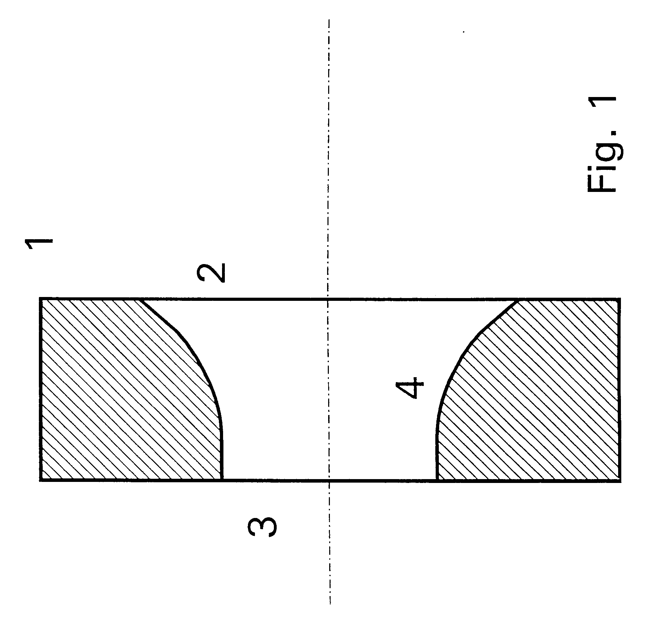

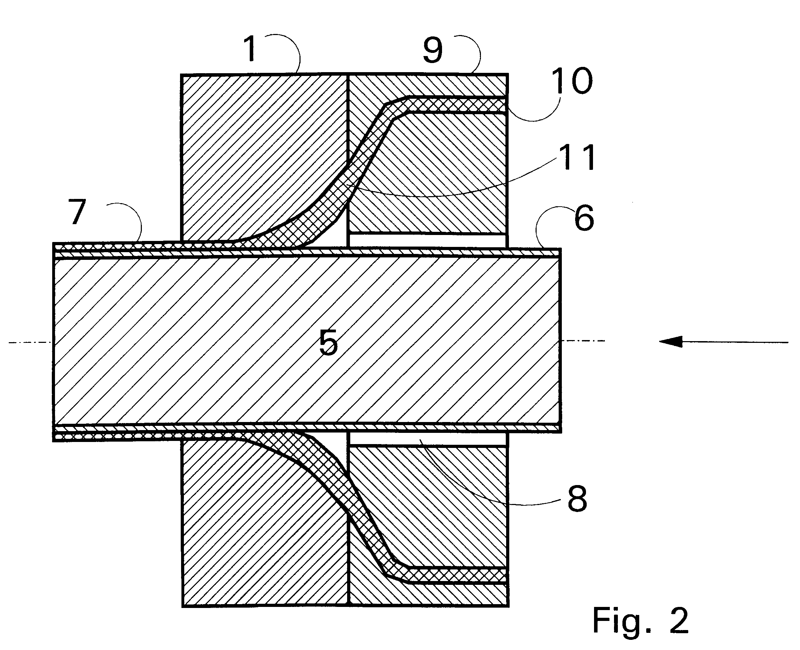

Les figures 1 et 2 ci-jointes illustrent de manière non limitative la présente invention.

La figure 1 représente en coupe une bague (1) de section circulaire conforme à l'invention, présentant une entrée (2) et une sortie (3) de diamètre inférieur. La surface intérieure (4) de cette bague assure une variation dégressive de son diamètre intérieur.

La figure 2 représente un dispositif d'application d'une couche de finition (7) à la surface d'un article composite de section circulaire comprenant une barre cylindrique extrudée (5) à base de matière plastique A, renforcée par enroulement hélicoïdal de faisceaux de fibres de renforcement (6). Ce dispositif d'application comprend un dispositif de surextrusion (9) auquel est associée une bague (1) conforme à l'invention, disposée dans l'axe du dispositif de surextrusion. Ce dernier comprend un orifice central (8) que traverse l'article renforcé (5, 6), ainsi qu'un espace intérieur annulaire (10) alimenté en matière plastique C fondue par une extrudeuse non représentée. Cet espace intérieur converge et se termine par un orifice périphérique annulaire (11), par lequel s'écoule la matière plastique C fondue et dont le diamètre extérieur est approximativement égal au diamètre de l'orifice d'entrée de la bague (1). Celle-ci est contiguë au dispositif de surextrusion.

A titre d'exemples non-limitatifs, l'invention permet notamment de produire des barres pleines à base de matière plastique, de section cylindrique, rectangulaire ou autre, fabriquées par extrusion, renforcées par des faisceaux de fibres de renforcement enroulés à leur surface et qui, grâce à l'application d'une couche de finition de matière plastique à l'aide d'une bague conformément à l'invention, présentent des dimensions précises et un état de surface satisfaisant.

De telles barres peuvent par exemple servir à accroître la rigidité en flexion et/ou en torsion de divers assemblages, tels que des portières ou autres parties de véhicules; elles peuvent notamment faire office d'arbres de transmission.

De même, l'invention permet encore de produire des profilés de sections diverses, par exemple en L, en T ou en U, renforcées par des faisceaux de fibres de renforcement apposés à leur surface parallèlement à leur axe, et qui, eux aussi, grâce à l'invention, présentent des dimensions précises et un état de surface satisfaisant.

## Revendications

1. Bague (1) d'application d'une couche de finition de matière plastique C à la surface d'un article composite comprenant un corps plein extrudé à base de matière plastique, renforcé par un ou plusieurs faisceaux de fibres de renforcement apposés à sa surface, le diamètre d'entrée (2) de ladite bague étant supérieur à son diamètre de sortie (3), la surface intérieure (4) de ladite bague assurant en outre une variation dégressive du diamètre intérieur entre son entrée et sa sortie.

2. Bague selon la revendication 1, dont la surface intérieure (4) est constituée essentiellement d'un matériau anti-adhérent.

3. Bague selon l'une quelconque des revendications précédentes, dont le profil de la surface intérieure (4) est tel que l'angle que forme sa tangente avec l'axe du tuyau soit inférieur à 5° à la sortie de celle-ci.

4. Dispositif d'application d'une couche de finition de matière plastique C à la surface d'un article composite comprenant un corps plein extrudé à base de matière plastique, renforcé par un ou plusieurs faisceaux de fibres de renforcement apposés à sa surface, comprenant un dispositif de surextrusion (9), caractérisé en ce qu'une bague (1) selon l'une quelconque des revendications précédentes est associée audit dispositif de surextrusion.

5. Installation pour la fabrication d'un article composite comprenant un corps plein extrudé à base de matière plastique, renforcé par un ou plusieurs faisceaux de fibres de renforcement apposés à sa surface et revêtu par une couche de finition (7) de matière plastique C, comprenant un dispositif de fabrication de l'article ainsi qu'un dispositif d'application d'une couche de finition selon la revendication 4.

6. Installation selon la revendication 5, dans laquelle le dispositif de fabrication de l'article composite comprend un dispositif d'extrusion d'un corps plein (5) à base de matière plastique A et un dispositif d'enroulement d'un ou plusieurs faisceaux de fibres de renforcement (6) autour de ce corps plein.

7. Procédé d'application d'une couche de finition (7) de matière plastique C sur un article composite comprenant un corps plein extrudé à base de matière plastique, renforcé par un ou plusieurs faisceaux de fibres de renforcement apposés à sa surface, dans lequel l'article traverse un dispositif d'application d'une couche de finition conforme à la revendication 4.

8. Procédé selon la revendication précédente, dans lequel l'article comprend un corps plein (5) à base d'une matière plastique A renforcé par un ou plusieurs faisceaux de fibres de renforcement enroulés à sa surface (6).

9. Procédé selon la revendication précédente, dans lequel le faisceau de fibres de renforcement est un COFIT.

10. Procédé selon l'une quelconque des revendications 7 à 9, dans lequel les matières plastiques mises en oeuvre sont essentiellement constituées de polyéthylène de haute densité.

11. Article composite comprenant un corps plein extrudé à base de matière plastique, à la surface duquel sont enroulés un ou plusieurs COFIT et revêtu extérieurement par une couche de finition, caractérisé en ce que la variation moyenne de la rugosité de la surface extérieure mesurée le long d'une génératrice dudit article ne dépasse pas 0,4 mm.
